(19) Europäisches Patentamt
European Patent Office
Office européen des brevets

(11) **EP 1 532 832 B1**

(12) **EUROPEAN PATENT SPECIFICATION**

(45) Date of publication and mention
of the grant of the patent:
**05.07.2006 Bulletin 2006/27**

(51) Int Cl.:
**H04Q 7/38** (2006.01)

(21) Application number: **03735625.0**

(22) Date of filing: **16.06.2003**

(86) International application number:
**PCT/EP2003/006294**

(87) International publication number:
**WO 2004/019644 (04.03.2004 Gazette 2004/10)**

(54) **RESOURCE UTILISATION BETWEEN DIFFERENT FREQUENCY BANDS BY COMPENSATING HANDOVER PARAMETER VALUES WITH A FREQUENCY BAND PREFERENCE PARAMETER**

BENUTZUNG VON RESSOURCEN ZWISCHEN UNTERSCHIEDLICHEN FREQUENZBÄNDERN DURCH KOMPENSATION VON HANDOVER-PARAMETERWERTEN DURCH EINEN FREQUENZBAND PREFERENZ-PARAMETER

UTILISATION DE RESSOURCE REPARTIE ENTRE DIFFERENTES BANDES DE FREQUENCE PAR LA COMPENSATION DE VALEURS DE PARAMETRES DE TRANSFERT PAR UN PARAMETRE DE PREFERENCE DE BANDE DE FREQUENCE

(84) Designated Contracting States:
**AT BE BG CH CY CZ DE DK EE ES FI FR GR HU IE IT LI LU MC NL PT RO SE SI SK TR**

(30) Priority: **21.08.2002 GB 0219429**

(43) Date of publication of application:
**25.05.2005 Bulletin 2005/21**

(73) Proprietor: **MOTOROLA, INC.**
**Schaumburg, IL 60196 (US)**

(72) Inventors:
• **CHEUNG, Colleen**
**Motorola Limited**
**Swindon, Wiltshire SN25 4XY (GB)**

• **CRANE, Edward**
**Motorola Limited**
**Swindon, Wiltshire SN25 4XY (GB)**
• **THOMAS, Howard**
**Motorola Limited**
**Swindon, Wiltshire SN25 4XY (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
**EP-A- 1 220 557        WO-A-01/22764**
**WO-A-01/69961        WO-A-02/01902**
**WO-A-93/26100        US-A- 6 141 565**

**Description**

Field of the invention

The invention relates to a cellular communication system and a base station and method of resource utilisation therefor and in particular to a Global System for Mobile communication (GSM) cellular communication system.

Background of the Invention

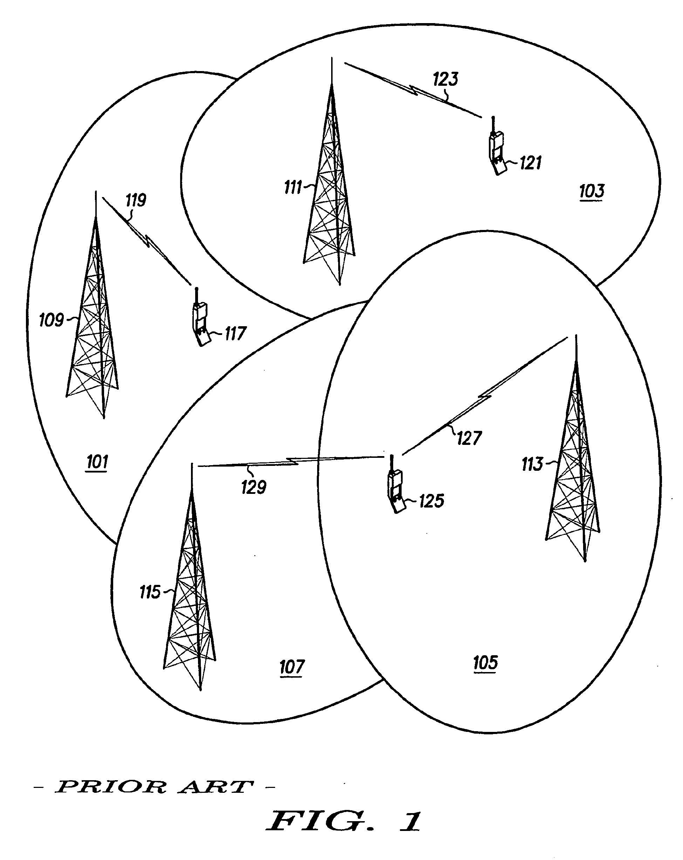

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115 it enters a region of overlapping coverage of the two base stations 111 and 113 and within this overlap region it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc. The base stations may themselves be considered part of the fixed network

The frequency band allocated for a cellular communication system is typically severely limited, and therefore the resource must be effectively divided between mobile stations. A fundamental property of a cellular communication system is that the resource is divided geographically by division into different cells. Thus a certain amount of resource (for example a frequency band) may at a given time be allocated to a given cell thereby reducing the resource allocation to neighbouring cells. In order to optimise the capacity of a cellular communication system, it is important to minimise the impact of interference caused by or to other mobile stations. An important advantage of a cellular communication system is that due to the radio signal attenuation with distance, the interference caused by communication within one cell is negligible in a cell sufficiently far removed, and therefore the resource can be reused in this cell. In addition, the resource is typically divided within one cell and between cells by division of the resource in the time domain, the frequency domain and/or the code domain. Different communication systems use different principles for this division. The resource allocation may be static or dynamic dependent on the current load of the communication system, and typically a combination of static and dynamic resource allocation is used.

First generation analogue communication systems use a frequency division multiple access (FDMA) system, where the frequency domain is used for dividing the resource between cells. In these systems, the frequency band is divided into narrowband channels of typically 25 kHz bandwidth. A number of these channels are allocated to each base station and upon call setup each mobile station will be allocated a specific narrowband channel for uplink communication and one for downlink communication.

Currently, the most ubiquitous cellular communication system is the 2nd Generation system known as the Global System for Mobile communication (GSM). Similarly to analogue systems, the frequency band is divided into relatively narrow channels of 200 kHz and each base station is allocated one or more of these frequency channels. However, in contrast to the analogue systems, each frequency channel is divided into eight separate time slots allowing up to eight mobile stations to use each frequency channel. This method of sharing the available resource is known as Time Division Multiple Access (TDMA). Further description of the GSM TDMA communication system can be found in 'The GSM System for Mobile Communications' by Michel Mouly and Marie Bernadette Pautet, Bay Foreign Language Books, 1992, ISBN 2950719007.

Another principle of resource distribution is employed in the 2nd generation system known as IS95, as well as in 3rd Generation systems such as the Universal Mobile Telecommunication System (UMTS). These systems divide the frequency into one or few wide band channels, which for UMTS has a bandwidth of 5 MHz. Typically, one wide band frequency channel is used for uplink in all cells and a different wide band frequency channel is used for downlink. In this case, separation between cells is achieved through the use of spread spectrum techniques, where each cell is allocated a cell specific long user spreading code.

In these systems, a signal to be transmitted is multiplied by the spreading code, which has a chip rate typically much larger than the data rate of the signal. Consequently, a narrowband signal is spread over the wideband frequency channel. In the receiver, the received signal is multiplied by the same spreading code thereby causing the original narrowband signal to be regenerated. However, signals from other cells having a different spreading code are not despread by the multiplication in the receiver, and remain wideband signals. The majority of the interference from these signals can consequently be removed by filtering of the despread narrowband signal, which can then be received.

A consequence of the spread spectrum techniques employed is that the amount of the interfering signals, which fall within the bandwidth of the narrowband signal cannot be removed by filtering, and will thus reduce the signal to interference ratio of the received signal. Consequently, it is of the outmost importance that the interference between mobile stations is optimised in order to maximise the capacity of the system. Further description of CDMA and specifically of the Wideband CDMA (WCDMA) mode of UMTS can be found in 'WCDMA for UMTS', Harri Holma (editor), Antti Toskala (Editor), Wiley & Sons, 2001, ISBN 0471486876.

Examples of wireless communication systems are disclosed in US 6,141,565 which discusses dynamic network parameter updates for use in a communication system and "EP 1 220 557 A1 which discusses a method of sharing a communication resource in a communication system.

As the use of mobile communication and especially cellular communication systems have increased dramatically in recent years, the demand for resource has increased significantly. Therefore, additional frequency bands have been allocated for cellular communication, such that a plurality of frequency bands is now typically available for mobile stations. For example, many GSM operators now have licenses covering several frequency bands including:

PGSM: The original (Primary) frequency band for GSM covering 890-915 MHz for uplink and 935-960 MHz for downlink.

GSM 1800: Also known as DCS or DCS 1800. This frequency band covers 1710 - 1785 MHz for uplink and 1805 - 1880 for downlink. Many operators have licenses for either the GSM 900 or GSM 1800 frequency band but some operators have licenses covering both frequency bands, or have engaged in mutual agreements with other operators allowing individual networks to use both frequency bands.

EGSM: This is an additional frequency band known as Extended GSM. The frequency band adds the frequency band from 880 to 890 MHz for the uplink and 925 - 935 MHz for the downlink to the PGSM bands.

In the initial GSM specifications, only the GSM 900 frequency band was specified and therefore early GSM mobile stations only have the single capability of using this frequency band. Furthermore, many mobile stations are for cost reasons manufactured to only have the capability for using a subset of the theoretically available frequency bands, although it is become increasingly common for mobiles stations to have the capability of using all or most frequency bands. Thus for a typical cellular communication system, the mobile station population covers a broad range of capabilities, and it is important for the resource management to optimise the resource allocation for the given mobile station capability distribution.

Another method which has been used to increase the capacity of cellular communication systems is the use of hierarchical cells. In this way, smaller cells, known as micro cells or picocells, are located within larger cells, known as macro cells. The micro- and picocells have much smaller coverage thereby allowing a much closer reuse of frequencies. Frequently the macro cells is used to provide coverage over a large area and micro cells and picocells are used to provide additional capacity in densely populated areas and hotspots. However, in order to optimise the capacity of the communication system, it is important that the resource allocation between different cells is optimised. The resource allocation thus becomes a highly critical and complicated process, especially for systems having a plurality of frequency bands with all or some bands having hierarchical cells

Further, many operators have acquired licenses for 3rd generation cellular communication systems such as UMTS. These systems will typically be deployed as islands of coverage wherein coverage is limited to smaller typically separated regions. Service in-between these regions will be provided by 2nd generation systems such as UMTS and it is therefore intended that most 3rd generation mobile stations will be dual mode mobile stations operable on both the 2nd and 3rd generation communication system. Thus in these systems, resource allocation must further be carefully managed between frequency bands of the different communication systems.

It is clear that resource management is becoming increasingly critical and complex, and that it is important for the resource allocation to be managed as optimally as possible in order to maximise the capacity of the communication system and provide the best service to the user. Therefore a large number of resource allocation algorithms and specifically handover algorithms have been developed. However, these algorithms tend to not consider the resource allocation or handovers between different frequency bands or systems, or to use a very simple decision criterion. Specifically, as all GSM mobile stations tends to have PGSM capability whereas only a subset historically have had the capability to use other frequency bands, a simple criterion has been used wherein all multi-band capable mobile stations are handed over to the new frequency bands. For example, in a combined PGSM and GSM 1800 system all dual band mobiles are handed over to GSM 1800 when a GSM 1800 base station is available for the mobile station.

However, this very simple approach is highly inflexible and in many situations do not result in optimal resource utilisation. For example, the transmit power required for a dual band mobile station may be significantly higher on GSM 1900 than on PGSM thereby resulting in significantly increased interference.

Furthermore, significant growth in availability of different frequency bands and resources has led to an increased desire to manage the overall distribution of resource in the network. Typically, resource management through mobility management, such as handover control, has been achieved by setting handover parameters for individual cells. For example, handovers of a given cell may be biased towards neighbouring micro cells in preference to macro cells. However, although this may achieve an acceptable handover performance in each individual cell, it is a very complex approach and only optimises the local resource distribution.

Consequently, the current methods result in reduced capacity of the communication system as well as degraded service to the user. Hence, an improved system for resource allocation would be advantageous.

Summary of the Invention

Accordingly the Invention seeks to provide an improved system of resource allocation. Preferably the invention seeks to alleviate or mitigate one or more of the above mentioned disadvantages and in particular to provide a more flexible and/or efficient system for resource distribution allowing for a simple yet efficient means of controlling resource distribution across frequency bands.

Accordingly there is provided, a method of resource utilisation between different frequency bands in accordance with claim 1.

Hence the invention provides for a simple way of influencing the resource distribution between a plurality of frequency bands for a plurality of base stations. The trade off between the influence of local handover parameters and non-local frequency band preference parameters on the handover decision can be optimised, thereby ensuring that non-locally set objectives can be met while maintaining high local performance. Specifically, a non-local resource distribution objective can be met while ensuring that the subscriber units receive a high quality of service with high quality and low probability of dropped calls. The frequency band preference parameter may be dynamically updated. Hence performance can be optimised to the current configuration and operational characteristics. The method is easy to implement as the only nun-local impact is the compensation of handover parameter values.

According to a feature of the invention, the method comprises the step of determining a preferred frequency band distribution for the communication system.

According to a different feature of the invention, the method further comprises the step of, in each of the plurality of base stations, generating an ordered list of candidate base stations ordered in response to the handover parameter values of the set. This provides a suitable ranking of handover candidates allowing for easy compensation by the frequency band preference parameter.

According to another feature of the invention, the handover parameter values comprise signal levels, the frequency band preference parameter is a power budget offset parameter and preferably the signal levels are relative signal levels between a serving cell for the subscriber unit and each of the candidate cells. This provides for a handover parameter which is suited for compensation by a frequency band preference parameter and achieves selection of appropriate handover candidates. It is furthermore compatible with many existing cellular communication systems.

According to a different feature of the invention, the handover parameter values comprise signal to interference levels. This provides for a handover parameter which is suited for compensation by a frequency band preference parameter and suitable for selecting appropriate handover candidates. It is furthermore compatible with many existing cellular communication systems.

According to another feature of the invention, the frequency band preference parameter is determined in response to a distribution of subscriber unit capabilities for a group of subscriber units. This allows for a desired resource distribution to be achieved by simple means in a cellular communication system wherein the capabilities of subscriber units vary. It furthermore provides for a system wherein the resource management may continuously adapt to changes in the distribution of subscriber unit capabilities.

According to one feature of the invention, the frequency band preference parameter is determined in response to a distribution of cell loading for a group of base stations. Hence, the frequency band preference parameter can be optimised for modifying a current resource distribution to a desired resource distribution.

According to a different feature of the invention, the frequency band preference parameter is determined in response to an availability of frequency bands. Thus, the resource distribution can be optimised for the available frequency bands.

According to another feature of the invention, the frequency band preference parameter is determined in response to a frequency band loading. Hence, the frequency band preference parameter can be optimised for modifying a current resource distribution to a desired resource distribution.

According to one feature of the invention, the method further comprises the step of offsetting at least one of the handover parameter values of the set by a hierarchical cell preference value. This provides that the resource distribution across a plurality of frequency bands can be optimised together with the optimisation of the resource distribution between different cell layers for a hierarchical cellular communication system.

According to a different feature of the invention, candidate cells having handover parameter values below a given quality level are not included in the set. This ensures that only candidate cells which can provide adequate quality of service will be included in the handover determination.

According to another feature of the invention, the method further comprises the step of ordering a handover list comprising possible handover candidates according to their power budget.

According to a second aspect of the invention, there is provided a base station in accordance with claim 14.

According to a third aspect of the invention, there is provided a cellular communication system according to claim 15.

Brief Description of the Drawings

An embodiment of the invention will be described, by way of example only, with reference to the drawings, in which

FIG. 1 is an illustration of a cellular communication system in accordance with the prior art;

FIG. 2 is a simplified illustration of a GSM communication system architecture;

FIG. 3 is an illustration of a handover control subsystem of a GSM communication system in accordance with an embodiment of the invention;

FIG. 4 is an illustration of a flowchart of a method of handover evaluation in accordance with an embodiment of the invention; and

FIG. 5 is an illustration of an example of a ranking of handover candidates in accordance with an embodiment of the invention.

Detailed Description of a Preferred Embodiment of the Invention

In the following, a preferred embodiment of the invention is described mainly with reference to a GSM cellular communications system. However, it will be apparent that the invention is applicable to many other communication systems including for example 3$^{rd}$ Generation cellular communication systems.

In a cellular communication system, the fixed infrastructure typically comprises complex functionality for managing the resource allocation, and specifically for managing handovers of subscriber units. A subscriber unit may typically be a wireless user equipment, a mobile station, a communication terminal, a personal digital assistant, a laptop computer, an embedded communication processor or any communication element communicating over the air interface.

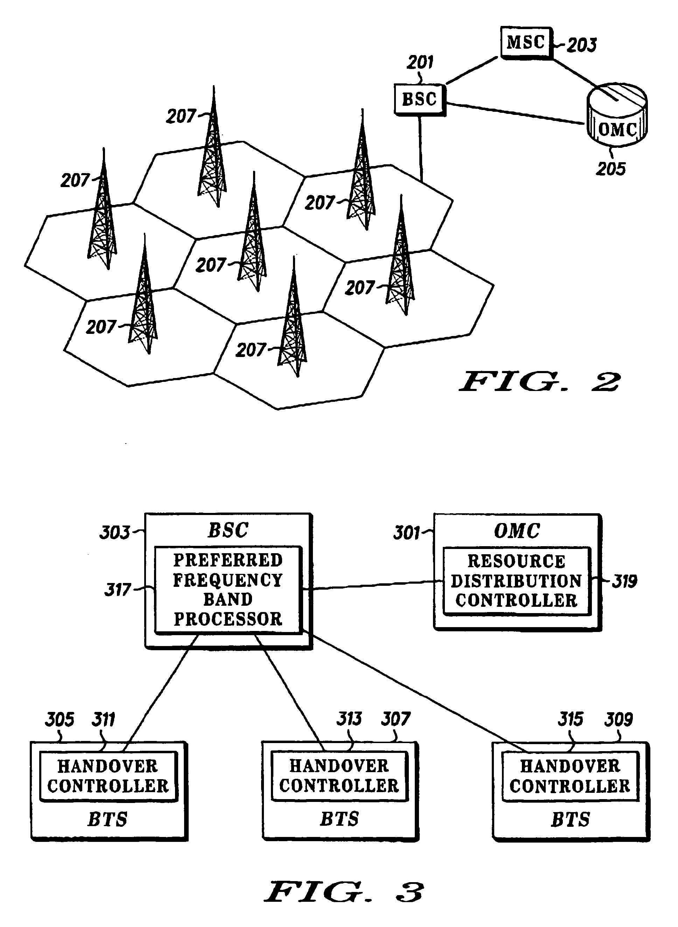

FIG. 2 is a simplified illustration of a GSM communication system architecture. In a typical GSM cellular communication system, a large number of Base Station Controllers (BSCs) 201 (one shown) are connected to a Mobile Services Switching Centre (MSC) 203. The MSC is the central switch centre and switches communication between different BSCs such that subscriber units connected to one BSC can communicate with subscriber units associated with other BSCs. In addition, the MSC is responsible for interfacing with other networks, performing authentication, some mobility management etc. The MSC 203 and typically the BSC 201 is connected to an Operations and Maintenance Centre (OMC) 205 which is where the operation and performance of the network is monitored and controlled by the network operator. Typically, various operational parameters can be set at the OMC and communicated to other network elements, such as the BSCs. In this way, the network operation can be managed from the OMC 205. The BSC is connected to a number of Base Station Transceivers (BTSs) 207 which are responsible for communicating with the subscriber units in the associated cell over the air interface.

Typically the handover control functionality is distributed between the functionality of a BSC and the associated BTSs. Thus in the preferred embodiment, the cellular communication system comprises a handover control subsystem distributed between a BSC and BTS. In addition, the communication system comprises a subsystem for setting up the physical channels for specific logical channels, handling the initial system configuration and updateable configuration changes etc.

The handover control subsystem for example recognises when radio conditions are such that a handover is required, processes measurement report information and collects/provides channel interference level measurements. The data from these measurements are stored in databases that also store parameters which control the timing of the measurement averaging process. These are used to perform the desired measurement averaging processes. The handover control process also maps measurements pertaining to the neighbour frequencies received from the subscriber unit to the frequency of the neighbour cells. As neighbour cell information and network changes occur, the appropriate changes are made to the relevant databases. The handover control subsystem may determine that a handover is required for other reasons than based on subscriber unit measurements. These reasons may include the loading of different cells, timing advances etc.

The handover control subsystem further comprises a handover evaluator subsystem, which evaluates handover candidates in response to a determination that a handover is required. The determination of the requirement for a handover includes determining a list of candidate cells. The handover evaluator subsystem is responsible for re-ordering the handover candidate list in order to choose the best candidate handover cell. If the handover is internal (i.e. to a BTS under the control of the same BSC as the current serving BTS), the handover control subsystem processes the handover itself. Otherwise, if the handover is external, the handover evaluation subsystem sends a handover required message to the fixed network. This message includes information related to the chosen candidate cells and is forwarded to the target BTS.

The handover control subsystem also comprises a call resource manager, which is responsible for choosing radio resources based on cell loading and channel interference levels. It also queues requests for radio resources, selects connection numbers, dynamically changes traffic channel configurations, tracks data on idle channel interference levels and reports the levels for resource indications. Additionally, the handover control subsystem chooses the channel speech rate and speech version depending on MSC preference, operator preference and available resources.

As mentioned previously, the handover control subsystem is responsible for monitoring measurement reports from the subscriber unit during a call. Specifically, a GSM subscriber unit is capable of monitoring up to 64 neighbours. The subscriber unit transmits information to the handover control subsystem related to the signal level at which the subscriber unit receives the pilot signal of the neighbours receive level. In addition, it transmits information related to the decoding of the base station identity of the neighbours, the serving cell's receive level, receive quality, timing advance, power level, whether discontinuous transmission is enabled and which neighbour list is use for the measurements.

At the handover control subsystem, the measurements are subject to averaging, and database parameters specify the number of measurements to be used in the average process. The handover control subsystem then makes decisions on handovers, power level changes and timing advance changes using the parameters measured by the subscriber units.

Handover triggers are typically based on the following criteria, in order of priority:

Receive Quality (Uplink)
Receive Quality (Downlink)
Interference level (Uplink and Downlink)
Receive Signal Strength (Uplink)
Receive Signal Strength (Downlink)
Distance (Timing Advance)
Power Budget (PBGT)

During a call, a handover may become necessary for any of the above listed reasons. In the preferred embodiment, the communication system utilises a plurality of frequency bands and the frequency bands to which a subscriber unit is allowed to handover are set in a database of the handover control subsystem. The determination of which cell to hand over to is usually based on a power budget algorithm. An example of a power budget algorithm is :

$$PBGT_{(n)} = \text{Neighbour Cell Received Signal Power} - \text{Serving Cell Received Signal Power}$$

$$= neighbour\_rxlev\_dl_{(n)} - [server\_rxlev\_dl + PWR\_C\_D]$$

where

- *server_rxlev_dl* and *neighbour_rxlev_dl*$_{(n)}$ are the signal levels of the traffic signal of serving cell and the pilot signal of the current neighbour cell measured by the subscriber unit respectively.
- *PWR_C_D* is a correction factor for the serving cell corresponding to the power level difference between the measured traffic signals and the full power pilot signal.

Conventionally, a handover is made to the neighbour cell having the highest power budget.

At present, 80-90% of the current worldwide GSM subscribers fall into the slow moving and stationary category. Deploying hierarchical, or layered, networks mean greater spectrum efficiency, coverage and capacity can be provided. However, introduction of a layered structure requires careful resource management and therefore the existing handover algorithms have been changed by customisation of the power budget calculations. A number of different power budget algorithms are typically used simultaneously in hierarchical system. One specific example of a conventional handover algorithm is a handover algorithm wherein handovers from a micro cell is only allowed to a macro cell if this is imperative. Hence, the normal power budget algorithm is executed for neighbour micro cells, and the subscriber unit is handed over to the micro cells having the best power budget. Macro cells are only considered if no micro cells provide acceptable quality. If no acceptable micro cells is determined, the power budget algorithm is thus performed for the neighbour macro cells and the subscriber unit is handed over to the target cell thereby identified.

Hence, in order to optimise the performance and service of a cellular communication system, it is important to have a handover control subsystem which effectively manages the resource distribution of all the resource categories available. The efficacy of the handover algorithms in terms of resource management depends on the distribution of traffic within the frequencies in an operator's network and the particular capabilities of subscriber units within that network. For example, in a dual-band (e.g. PGSM / GSM1800) network, only a small subset of subscriber units historically have had the capability of using the GSM 1800 frequency bands, and handover algorithms have therefore handed all GSM 1800 capable subscriber units over to these bands if possible. However presently most subscriber units are capable of operating in both bands, and therefore this algorithm results in an asymmetric resource load as the majority of subscriber units are handed over to GSM 1800. This results in increased interference and thus reduced quality of service and capacity of the communication system. In, for example, a PGSM / EGSM / DCS1800 network, the situation becomes even more complicated, and it is clear that more sophisticated algorithms are required.

Most currently used handover algorithms were designed with no more than two frequency bands in mind, and at the time of the design of the algorithms, most subscriber units were mainly capable of operating on one frequency band only (i.e. PGSM). Subscriber unit capabilities have improved greatly in the meantime, however, and now there is a varied distribution of subscriber unit capabilities in today's networks. In accordance with the preferred embodiment, a more flexible system for handovers are provided resulting in increased capacity and improved quality of service with less dropped calls.

Furthermore, most conventional handover control subsystems are based on local settings and conditions and therefore provide a local optimisation. However, the preferred embodiment provides for an optimisation of the resource distribution over a plurality of base stations. Specifically in the preferred embodiment, a frequency band preference parameter for at least a first frequency band is determined for a plurality of base stations and consequently communicated to the plurality of base stations. The plurality of base stations uses the frequency band preference parameter in the determination of the preferred handover candidate, and thus preferably provides the same biasing towards or away from a given frequency band. Hence, it is possible to centrally control and manage the resource distribution over a plurality of frequency bands.

FIG. 3 is an illustration of a handover control subsystem of a GSM communication system in accordance with an embodiment of the invention. The subset of the GSM communication system illustrated in FIG.3 comprises an OMC 301 connected to a BSC 303 which again is connected to three BTSs 305, 307, 309. The handover control subsystem is in this example distributed between the BSC 303 and the BTSs 305, 307, 309. Thus the BSC 303 comprises functionality for setting handover parameters which are applicable to all BTSs 305, 307, 309. Each BTS 305, 307, 309 further comprises functionality specific to the handover determination in the specific cell served by the BTS 305, 307, 309. Hence, each BTS 305, 307, 309 comprises a handover controller 311, 313, 315 which processes the measurements from the subscriber units, calculates power budgets and performs other functions required for determining a suitable handover candidate for a subscriber unit served by the BTS 305, 307, 309. The BSC 303 specifically comprises a preferred frequency band processor 317 that determines a preferred frequency band. The preferred frequency band parameter is communicated to the BTSs 305, 307, 309 and the same frequency band is treated as a preferred frequency band by all the BTSs 305, 307, 309. The handover controller 311, 313, 315 of each BTS 305, 307, 309 performs the handover evaluation and determines the preferred handover candidate taking into account the frequency band preference parameter determined by the preferred frequency band processor 317 of the BSC 303.

In the example shown, the handover control subsystem thus comprises the preferred frequency band processor 317 of the BSC and the handover controllers of the BTSs.

In the example of FIG. 3, the OMC 301 comprises a resource distribution controller 319. The resource distribution controller 319 determines a preferred resource distribution across the frequency bands of the communication system. For example, it may determine that an even distribution of resource should be sought. In the simplest embodiment, the preferred resource distribution is simply entered as a user input by an operator but in more advanced embodiments, the resource distribution may take into account various operating and configuration parameters of the communication system. Specifically, the resource distribution may take into account the deployment conditions and thus for example the coverage and available capacity of different frequency bands.

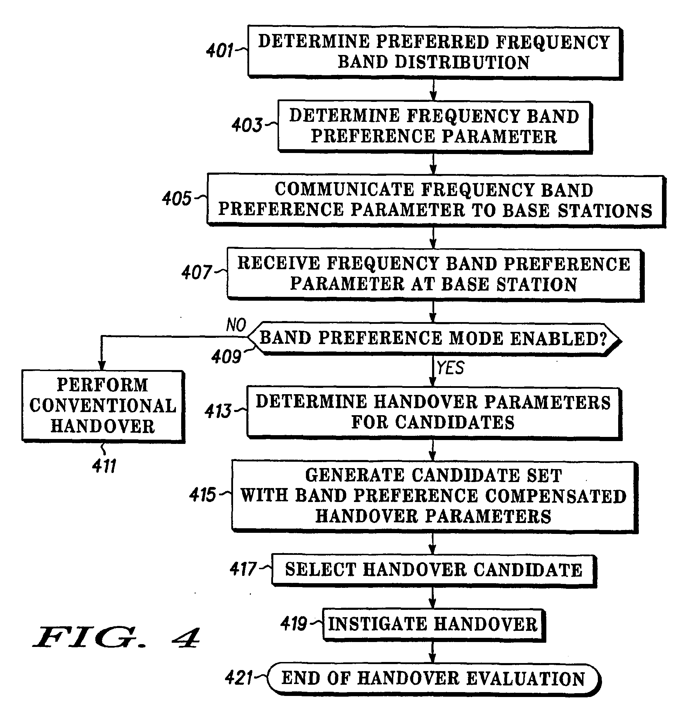

FIG. 4 is an illustration of a flowchart of a method of handover evaluation in accordance with an embodiment of the invention. The method is applicable to the GSM communication system of FIG. 3, and will be described with reference to this.

In step 401, the resource distribution controller 319 in the OMC 301 determines a preferred frequency band distribution for the communication system as a whole. In the preferred embodiment, the resource capacity of each frequency band is substantially identical and the frequency band distribution is set evenly, i.e. such that it is sought to distribute the resource consumption evenly across the different frequency bands.

In other embodiments, the preferred frequency band distribution of resource may be set to take into account available capacity on each of the frequency bands. For example, one frequency band, e.g. PGSM, may have twice the capacity of a second frequency band, e.g. GSM 1800, due to it being more fully deployed. In this case, it is preferable to have a distribution of resource reflecting the difference in capacity, and the preferred frequency band distribution may specifically be set to allocate twice as many subscriber units to the first frequency band as to the second frequency band. In some embodiments, a cost function associated with using one of the frequency bands may be higher than for using another frequency, and the preferred frequency band distribution may be set to reflect this. For example, if one frequency band is at a much higher frequency than another, it will due to propagation conditions require higher transmit powers resulting in extra power consumption. The associated cost in terms of battery life is thus increased for this frequency band and the preferred frequency band distribution will therefore be weighted more towards other frequency bands.

In step 403, the preferred frequency band processor 317 of the BSC 303 determines a frequency band preference parameter for at least a first frequency band. The frequency band preference parameter is a parameter associated with a degree of preference for the first frequency band. Preferably the frequency band preference parameter can be used to bias resource to or away from the first frequency band. It is within the contemplation of the invention, that the frequency band preference parameter may be any suitable parameter but in the preferred embodiment, it is a power budget offset which can be used to modify the calculated power budget in the base stations.

The frequency band preference parameter is common for a plurality of base stations and is used to control the resource allocation and specifically the handover behaviour such that the preferred resource distribution across different frequency bands can be achieved. Hence, the parameter is used to manage the behaviour of a group of cells thereby controlling the resource distribution between frequency bands for preferably a region formed by the cells of the group of base stations.

In step 405, the frequency band preference parameter is distributed to a plurality of base stations, and in particular it is communicated from the preferred frequency band processor 317 to each of the handover controllers 311, 313, 315 of the BTSs 305, 307, 309. The distribution may be by any suitable means but in the preferred embodiment, it is by the fixed connections existing between the BSC 303 and the BTSs 305, 307, 309. The frequency band preference parameter may be communicated in any suitable form. In the preferred embodiment the actual frequency band preference parameter is communicated but in other embodiments a representation of the frequency band preference parameter is communicated, or other information allowing the base stations to determine the frequency band preference parameter is transmitted. Thus, in one embodiment the base station may comprise a predefined list of frequency band preference parameters, and the communication of the frequency band preference parameter is simply achieved by communicating identity information for the frequency band preference parameter value which can be used for an appropriate table look up.

In step 407, each handover controller 311, 313, 315 receives the frequency band preference parameter in any suitable form. The following steps are performed independently by each handover controller 311, 313, 315 for subscriber units served by that BTS. However, all handover controllers 311, 313, 315 use the same frequency band preference parameter in the process. The following description focuses on the operation of handover controller 311.

Initially, in step 409, the handover controller 311 determines if the band preference mode is enabled, i.e. whether the BTS 305 should operate by taking into consideration the resource distribution between the preferred bands or not. If not, the process continues in step 411 by performing a conventional handover without consideration of the frequency band preference parameter. Otherwise, the method continues in step 413.

In step 413, the handover controller 311 determines plurality of handover parameter values for a plurality of candidate cells for a subscriber unit. Specifically, the handover controller 311 determines the power budget for a number of neighbour cells for a subscriber unit that is trying to hand over to another cell. Hence a handover candidate list is generated for each subscriber unit handing over, the handover candidate list comprising the possible handover candidates ordered according to their power budget.

In the preferred embodiment, the handover controller 311 determines a suitable handover candidate based on the measurements by the subscriber unit. However in order for a neighbour cell to be considered as a valid handover target, it must meet a criterion indicating that acceptable performance can be achieved for the neighbour cell. Thus this criterion ensures that the subscriber unit receives the potential handover target at a power level sufficient for the BTS of that cell to support a good call. A neighbour cell is considered valid to be entered on the list of potential candidates, if the receive level at the subscriber unit for this cell is above a threshold $RXLEV\_MIN_{(n)}$ which can be set in the handover control database.

$$\text{Criterion 1:} \qquad rxlev\_ncell_{(n)} > rxlev\_min_{(n)}$$

where

$rxlev\_ncell$ is the latest averaged received signal strength processed for that neighbour and $rxlev\_min_{(n)}$ is a database defined threshold.

Hence the handover parameter values determined in step 413 is limited to the cells for which the power budget meets Criterion 1.

In step 415 a set of handover parameter values is generated with the set comprising the plurality of handover parameter values of the handover candidate list barring any candidates failing to meet criterion 1. In the set, the handover parameter values associated with the first frequency are compensated and preferably offset by the frequency band preference parameter. Thus a set of handover parameters are generated which includes a biasing caused by the compensation by the frequency band preference parameter. In the preferred embodiment, the frequency band preference parameter is a power budget offset parameter, and the power budget values of the candidate handover list are compensated for the candidates of the first frequency. For example, the power budgets of all candidates of a preferred band may be improved by a 6dB factor. After the power budget values have been modified, the handover candidate list is reordered taking into account the compensated power budget values.

Following step 415, the method continues in step 417 by determining a handover candidate cell in response to the handover parameter values of the set. Thus, a target handover candidate is in the preferred embodiment selected from the reordered handover candidate list. Following the selection of a target handover candidate, the handover is instigated in step 419 using the same handover process as for a conventional handover. Should the handover to the preferred candidate not be possible, for example if the target base station rejects the handover request, the next handover candidate in the reordered list is selected.

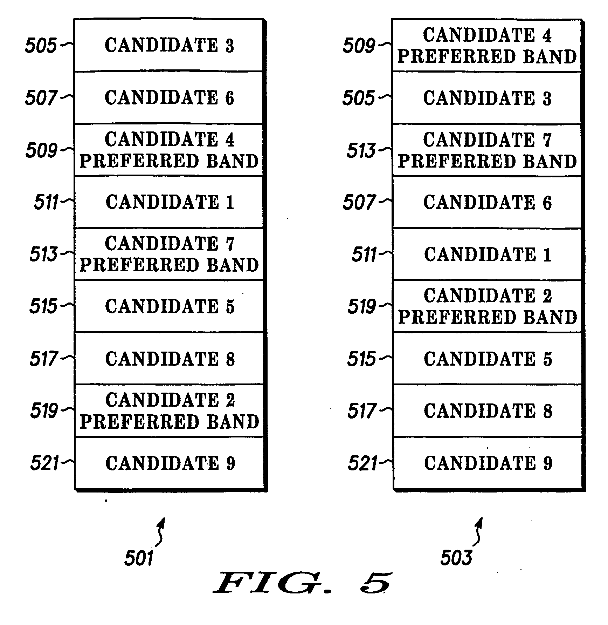

The approach is illustrated in FIG. 5, which is an illustration of an example of a ranking of handover candidates in accordance with an embodiment of the invention.

FIG. 5 shows a first list 501 corresponding to a ranking of the handover candidates 505 - 521 by the handover controller 311 according to the power budget as done in step 413. As can be seen, candidate 3 505 has the best power budget followed by candidate 6 507 and candidate 4 509. Thus, conventionally a handover would be instigated to handover candidate 3 305. However, in accordance with the preferred embodiment, the handover candidate list is reordered taking into account the frequency band preference parameter of at least one frequency band. In the shown example, one of the frequency bands is a preferred frequency band as determined by the preferred frequency band processor 317. For example it may be preferred to hand over as many subscriber units to GSM 1800 as possible in order to increase the current resource utilisation of that band.

Therefore, a frequency band preference parameter consisting in a power budget offset for the GSM 1800 frequency band has been generated in the preferred frequency band processor 317 and communicated to the handover controller 311. Each of the power budgets for candidates 4, 7 and 2, which are GSM 1800 candidates, are increased by the frequency band preference parameter value. The candidate handover list is then reordered in response to the offset power budget values (i.e. as compensated by the frequency band preference parameter) to provide a compensated power budget handover candidate list 503. As illustrated in FIG. 6, the compensation of candidate 4 has improved the power budget for this candidate above that of candidates 3 and 6, and candidate 4 is therefore the preferred handover candidate. However, the compensation of candidate 7 has only resulted in that candidate having a better power budget than candidate 6, whereas it is still worse than candidate 3. Therefore, candidate 3 is the second highest ranked handover candidate followed by candidate 7 and candidate 6. Following the reordering, the compensated power budget handover candidate list 503 is then used to determine the handover candidate by selecting the highest ranked candidate as the handover target.

As Fig.5 indicates, if the power budget values of the candidates of the preferred band are reasonable values in relation to the other candidates, the preferred band candidates will tend to be biased towards the top of the list. If, however, the power budget values of the candidates of the preferred band are unsatisfactory, another candidate will be the first choice for the handover target. The level of the bias clearly depends on the actual value of the frequency band preference parameter. Hence, a very subtle biasing can be achieved that can modify the resource distribution across the different frequency bands yet ensure that only suitable handover candidates are selected. Thus, an improved distribution is obtained while ensuring high quality of service for the individual subscriber unit.

Furthermore, the biasing and thus resource distribution is controlled centrally and results in an overall resource distribution for a plurality of cells while the individual and local impact is maintained at a minimum, resulting in high performance of the handover process in each individual base station. Furthermore, the only local modification required to implement the global resource distribution is the modification of a single handover parameter. Thus the method is very simple to implement.

It will be apparent that the embodiment tends to provide one or more of the following advantages singly or in combination:

- It provides a simple way to manage, control and /or modify a resource distribution across several frequency bands.
- Simple central control provides for local biasing having limited local quality of service impact yet resulting in the desired global modification.
- High quality of service is provided to individual subscriber units while providing a desired resource distribution.
- It provides a method allowing for dynamic adaptation to the current operating conditions.
- It provides a method wherein accurate resource distribution is possible with low amounts of biasing being feasible.
- The approach can easily be implemented with many different handover algorithms.
- It provides for control of global resource distribution while retaining high localised performance.

It is within the contemplation of the invention that the handover decision may take a number of parameters into account rather than just the power budget. Further, compensations, modifications or offsets may be introduced to the handover parameters based on other considerations than the resource distribution across frequency bands. Hence, in the preferred embodiment, the method further comprises the step of offsetting at least one of the handover parameter values of the set by a hierarchical cell preference value. Thus a bias is introduced not just towards the preferred frequency band but also towards a layer of the network, i.e. typically towards the micro cell or pico cell layers. In the preferred embodiment, the bias is introduced in a similar fashion to the offset for the frequency band preference parameter, i.e. a power budget offset is added to handover candidates which are micro cells or pico cells.

The determination and control of the layer offset is preferably performed locally as it depends on the topological and geographic conditions for each cell, and specifically on the availability of micro and pico-cells as neighbours. The preferred band offset and the layer offset thus integrate easily despite the central approach of one and the local approach of the other. It fully allows operators to configure and optimise their networks according to both local and global needs and requirements. It thus enables operators to easily configure the behaviour of their networks with regards to preferred frequency bands and micro cells according to their preference, simply by setting the appropriate values of the compensation parameters.

It is within the contemplation of the invention that other handover parameters may be used in the handover selection process, and that one of these may be compensated by the frequency band preference parameter rather than the power budget. Further, a plurality of handover parameters may be used in the selection process and the offset by the frequency band preference parameter may be of one or more of these handover parameters. As such, the frequency band preference parameter may be a compound parameter comprising several sub-parameters with each sub-parameter corresponding to the compensation for a different parameter.

In one embodiment, the handover parameter values comprise signal levels and the handover and frequency band preference parameter offsetting is mainly based on the signal levels. Hence, the handover may simply be based on measured signal levels of the pilot signals of the neighbouring base stations. However, in the preferred embodiment, the signal levels are relative signal levels between a serving cell for the subscriber unit and each of the candidate cells. Thus in the preferred embodiment, the handover determination and frequency band preference parameter compensation is preferably based on the power budgets as previously described. Alternatively or additionally, the handover parameter values may comprise signal to interference levels.

It is within the contemplation of the invention that the frequency band preference parameter may be determined in any suitable fashion and in response to any suitable parameters. Hence, in very simple embodiments, the frequency band preference parameter is directly provided by the network operator, and thus the frequency band preference parameter is simply determined in response to a user input. However, in the preferred embodiment, the frequency band preference parameter is determined in response to an availability of frequency bands. Thus the frequency band preference parameter is preferably set depending on which frequency bands are available to the subscriber units. Specifically, the availability of frequency bands may vary across the communication system and consequently the area covered by the communication system may be divided into a number of different regions with different frequency band availability. In this case, each region may set the frequency band preference parameter differently for the base stations comprised in the region. In this way, the resource distribution can easily be adapted to the varying conditions across the communication system.

In one embodiment, the frequency band preference parameter is determined in response to a distribution of subscriber unit capabilities for a group of subscriber units. For example, in a communication system comprising a first and second frequency band, all subscriber units may be able to communicate on the first frequency band whereas only a proportion of the subscriber units can communicate on the second frequency. If that proportion is very low, a strong biased is introduced to the frequency band preference parameter to ensure that all subscriber units hand over to the second frequency if at all possible. However, if the proportion is very high only a small bias is needed to achieve an even distribution of resource across the two frequency bands. In a typical communication system, the capabilities of the subscriber units often vary significantly and changes as the subscriber units become more and more advanced. Hence, the embodiment provides a method for dynamically controlling the resource distribution across frequency bands as the distribution of subscriber unit capabilities changes in the system.

Additionally or alternatively, the frequency band preference parameter may be determined in response to a distribution of cell loading for a group of base stations. Hence, in one embodiment the preferred frequency band processor continually monitors the resource usage for the base stations of that BSC. The resource consumption is monitored individually for a plurality of frequency bands, and if it is determined that the distribution is preferably changed, the frequency band preference parameter is modified to bias the handovers towards the desired frequency band. Hence, in the specific case of two frequency bands, if it is determined that one frequency band is significantly more loaded than the other, a frequency band preference parameter is set for the second frequency band that will improve the power budget values for handover candidates of that cell. Hence, a dynamic management of the resource distribution is achievable by a simple mechanism. The monitoring of the current conditions and especially the loading in the communication system may be based on the loading of cells and/or the frequency bands.

In accordance with one embodiment of the invention, the method comprises the step of instigating a handover in response to the handover parameter values of the set. For example, the handover controller may continually perform the described handover evaluation procedure for one or more subscriber units whether a handover has been requested or not. If the handover evaluation results in a handover candidate meeting certain conditions, a handover may be instigated. These conditions may for example include that the power budget (as compensated by the frequency band preference parameter) for a neighbour cell exceeds a given threshold. Hence, the method in accordance with the described embodiment may itself trigger a handover.

In one embodiment, the compensation of the handover parameter values associated with the first frequency is not a direct modification of the handover parameters themselves. Rather the frequency band preference parameter defines a maximum offset between the handover parameters of the preferred band and the strongest uncompensated handover parameter. Hence in this embodiment the offset defines a maximum difference in the power budget values between the cell having the best power budget and the cell of the preferred-band having the best power budget. In this embodiment, the cells exceeding this limit is excluded from the set, and the target handover candidate is selected as the best preferred band cell remaining in the set, and if no cells of the preferred band remains as the best cell. The embodiment is equivalent to the previously described offset approach in that if the power budget value of the preferred band cell

added to the frequency band preference parameter is less than the power budget value of the "best" cell, the preferred band cell will be removed from the handover candidate list, thus eliminating the bad power budget handover candidate.

The invention can be implemented in any suitable form including hardware, software, firmware or any combination of these. However, preferably, the invention is implemented as computer software running on one or more data processors. The elements and components of an embodiment of the invention may be located in the core network, the radio access network, a subscriber unit or any suitable physical or functional location. Indeed the functionality may be implemented in a single unit, in a plurality of units or as part of other functional units. As such, the invention may be implemented in a single unit or may be physically and functionally distributed in the communication system.

**Claims**

1. A method of resource utilisation between different frequency bands in a cellular communication system, the method **characterized by** the steps of

   determining (403) a frequency band preference parameter for at least a first frequency band;
   distributing (405) the frequency band preference parameter to a plurality of base stations;
   in each of the plurality of base stations:

      determining (413) a plurality of handover parameter values for a plurality of candidate cells for a subscriber unit;
      generating a set of offset handover parameter values comprising the plurality of handover parameter values, wherein the handover parameter values associated with the first frequency are offset by the frequency band preference parameter; and
      determining (417) a handover candidate cell in response to the offset handover parameter values of the set.

2. A method as claimed in claim 1 further **characterized by** the step of determining (401) a preferred frequency band distribution for the communication system.

3. A method as claimed in any of the previous claims wherein the method further comprises the step of, in each of the plurality of base stations, generating (415) an ordered list of candidate base stations ordered in response to the handover parameter values of the set.

4. A method as claimed in any of the previous claims wherein the handover parameter values comprise signal levels, and the frequency band preference parameter is a power budget offset parameter.

5. A method as claimed in claim 4 wherein the signal levels are relative signal levels between a serving cell for the subscriber unit and each of the candidate cells.

6. A method as claimed in any of the previous claims wherein the handover parameter values comprise signal to interference levels.

7. A method as claimed in any of the previous claims wherein the frequency band preference parameter is determined in response to a distribution of subscriber unit capabilities for a group of subscriber units.

8. A method as claimed in any of the previous claims wherein the frequency band preference parameter is determined in response to a distribution of cell loading for a group of base stations.

9. A method as claimed in any of the previous claims wherein the frequency band preference parameter is determined in response to an availability of frequency bands.

10. A method as claimed in any of the previous claims wherein the frequency band preference parameter is determined in response to a frequency band loading.

11. A method as claimed in any of the previous claims further comprising the step of offsetting at least one of the handover parameter values of the set by a hierarchical cell preference value.

12. A method as claimed in any of the previous claims wherein candidate cells having handover parameter values below a given quality level are not included in the set.

13. A method as claimed in any of the previous claims further comprising the step of ordering a handover list comprising possible handover candidates according to their power budget.

14. A base station for a cellular communication system comprising a plurality of frequency bands, the base station **characterized by**:

    a receiver for receiving a frequency band preference parameter for at least a first frequency band of the plurality of frequency bands; and

a handover processor operable to

determine a plurality of handover parameter values for a plurality of candidate cells for a subscriber unit;
generate a set of offset handover parameter values comprising the plurality of handover parameter values wherein the handover parameter values associated with the first frequency are offset by the frequency band preference parameter; and
determine a handover candidate cell in response to the offset handover parameter values of the set.

15. A cellular communication system comprising a plurality of frequency bands, the cellular communication system comprising

a frequency band processor (317) for determining a frequency band preference parameter for at least a first frequency band;
means for distributing the frequency band preference parameter to a plurality of base stations;
a plurality of base stations (305, 307, 309), each of the plurality of base stations comprising:

means for determining a plurality of handover parameter values for a plurality of candidate cells for a subscriber unit;
means for generating a set of offset handover parameter values comprising the plurality of handover parameter values wherein the handover parameter values associated with the first frequency are offset by the frequency band preference parameter; and
means for determining a handover candidate cell in response to the offset handover parameter values of the set.

**Patentansprüche**

1. Verfahren zur Ressourcenverwendung zwischen verschiedenen Frequenzbändern in einem zellularen Kommunikationssystem, wobei das Verfahren durch die Schritte **gekennzeichnet** ist:

Bestimmen (403) eines Frequenzband-Vorzugsparameters für zumindest ein erstes Frequenzband;
Verteilen (405) des Frequenzband-Vorzugsparameters an eine Mehrzahl von Basisstationen;
in jeder der Mehrzahl von Basisstationen:

Bestimmen (413) einer Mehrzahl von Handoverparameterwerten für eine Mehrzahl von Kandidatenzellen für eine Teilnehmereinheit;
Erzeugen eines Satzes von Offset-Handoverparameterwerten, der die Mehrzahl von Handoverparameterwerten umfasst, wobei die Handoverparameterwerte, die der ersten Frequenz zugeordnet sind, einen Offset um den Frequenzband-Vorzugsparameter aufweisen; und
Bestimmen (417) einer HandoverKandidatenzelle in Abhängigkeit von den Offset-Handoverparameterwerten des Satzes.

2. Verfahren nach Anspruch 1, das weiterhin durch den Schritt des Bestimmens (401) einer bevorzugten Frequenzbandverteilung für das Kommunikationssystem **gekennzeichnet** ist.

3. Verfahren nach einem der vorhergehenden Ansprüche, wobei das Verfahren weiterhin den Schritt des Erzeugens (415), in jeder der Mehrzahl von Basisstationen, einer geordneten Liste von Kandidatenbasisstationen umfasst, die in Abhängigkeit von den Handoverparameterwerten des Satzes geordnet sind.

4. Verfahren nach einem der vorhergehenden Ansprüche, wobei die Handoverparameterwerte Signalpegel umfassen und der Frequenzband-Vorzugsparameter ein Leistungsbudget-Offsetparameter ist.

5. Verfahren nach Anspruch 4, wobei die Signalpegel relative Signalpegel zwischen einer bedienenden Zelle für die Teilnehmereinheit und jeder der Kandidatenzellen sind.

6. Verfahren nach einem der vorhergehenden Ansprüche, wobei die Handoverparameterwerte Signal-zu-Interferenz-Pegel umfassen.

7. Verfahren nach einem der vorhergehenden Ansprüche, wobei der Frequenzband-Vorzugsparameter in Abhängigkeit von einer Verteilung von Teilnehmereinheit-Leistungsfähigkeiten für eine Gruppe von Teilnehmereinheiten bestimmt wird.

8. Verfahren nach einem der vorhergehenden Ansprüche, wobei der Frequenzband-Vorzugsparameter in Abhängigkeit von einer Verteilung einer Zelllast für eine Gruppe von Basisstationen bestimmt wird.

9. Verfahren nach einem der vorhergehenden Ansprüche, wobei der Frequenzband-Vorzugsparameter in Abhängigkeit von einer Verfügbarkeit von Frequenzbändern bestimmt wird.

10. Verfahren nach einem der vorhergehenden Ansprüche, wobei der Frequenzband-Vorzugsparameter in Abhängigkeit von einer Frequenzbandlast bestimmt wird.

11. Verfahren nach einem der vorhergehenden Ansprüche, das weiterhin den Schritt des mit einem Offset Versetzens von zumindest einem der Handoverparameterwerte des Satzes um einen hierarchischen Zellenvorzugswert umfasst.

12. Verfahren nach einem der vorhergehenden Ansprüche, wobei Kandidatenzellen mit Handoverparameterwerten unterhalb eines gegebenen Qualitätspegels nicht in dem Satz enthalten sind.

13. Verfahren nach einem der vorhergehenden Ansprüche, das weiterhin den Schritt des Ordnens einer Handoverliste umfasst, die mögliche Handoverkandidaten aufweist, gemäß ihrem Leistungsbudget.

14. Basisstation für ein zellulares Kommunikationssystem, das eine Mehrzahl von Frequenzbändern umfasst, wobei die Basisstation **gekennzeichnet ist durch**:

   einen Empfänger zum Empfangen eines Frequenzband-Vorzugsparameters für zumindest ein erstes Frequenzband aus der Mehrzahl von Frequenzbändern; und
   einen Handoverprozessor, der betriebsfähig ist, eine Mehrzahl von Handoverparameterwerten für

   eine Mehrzahl von Kandidatenzellen für eine Teilnehmereinheit zu bestimmen;
   einen Satz von Offset-Handoverparameterwerten zu erzeugen, der die Mehrzahl von Handoverparameterwerten umfasst, wobei die Handoverparameterwerte, die der ersten Frequenz zugeordnet sind, einen Offset um den Frequenzband-Vorzugsparameter aufweisen; und
   eine Handoverkandidatenzelle in Abhängigkeit von den Offset-Handoverparameterwerten des Satzes zu bestimmen.

15. Zellulares Kommunikationssystem, das eine Mehrzahl von Frequenzbändern umfasst, wobei das zellulare Kommunikationssystem umfasst
   einen Frequenzbandprozessor (317) zum Bestimmen eines Frequenzband-Vorzugsparameters für zumindest ein erstes Frequenzband;
   Mittel zum Verteilen des Frequenzband-Vorzugsparameters an eine Mehrzahl von Basisstationen;
   eine Mehrzahl von Basisstationen (305, 307, 309), wobei jede der Mehrzahl von Basisstationen umfasst:

   Mittel zum Bestimmen einer Mehrzahl von Handoverparameterwerten für eine Mehrzahl von Kandidatenzellen für eine Teilnehmereinheit;
   Mittel zum Erzeugen eines Satzes von Offset-Handoverparameterwerten, der die Mehrzahl von Handoverparameterwerten umfasst, wobei die Handoverparameterwerte, die der ersten Frequenz zugeordnet sind, einen Offset um den Frequenzband-Vorzugsparameter aufweisen;
   Mittel zum Bestimmen einer Handover-Kandidatenzelle in Abhängigkeit von den Offset-Handoverparameterwerten des Satzes.

**Revendications**

1. Procédé d'utilisation de ressources entre différentes bandes de fréquences dans un système de communication cellulaire, le procédé étant **caractérisé par** les étapes consistant à :

   déterminer (403) un paramètre de préférence de bande de fréquences pour au moins une première bande de fréquences;

distribuer (405) le paramètre de préférence de bande de fréquences entre une pluralité de stations de base;

dans chacune de la pluralité de stations de base :

déterminer (413) une pluralité de valeurs de paramètres de transfert pour une pluralité de cellules candidates pour une unité d'abonné;

générer un ensemble de valeurs de paramètres de transfert de décalage comprenant la pluralité de valeurs de paramètres de transfert, les valeurs des paramètres de transfert associées à la première fréquence étant décalées du paramètre de préférence de la bande des fréquences; et

déterminer (417) une cellule candidate au transfert en réponse aux valeurs de paramètres de transfert de décalage de l'ensemble.

2. Procédé selon la revendication 1, **caractérisé en outre par** l'étape (401) consistant à déterminer une distribution préférée de bandes de fréquences au système de communication.

3. Procédé selon l'une quelconque des revendications précédentes, selon lequel le procédé comprend en outre l'étape consistant à produire (415), dans chacune de la pluralité de stations de base, une liste ordonnée de stations de base candidates rangées en réponse aux valeurs de paramètres de transfert de l'ensemble.

4. Procédé selon l'une quelconque des revendications précédentes, selon lequel les valeurs de paramètres de transfert comprennent des niveaux de signaux, et le paramètre de préférence de la bande des fréquences est un paramètre de décalage de budget de puissance.

5. Procédé selon la revendication 4, selon lequel les niveaux des signaux sont des niveaux de signaux relatifs entre une cellule d'un service dans l'unité d'abonné et chacune des cellules candidates.

6. Procédé selon l'une quelconque des revendications précédentes, selon lequel les valeurs des paramètres de transfert comprennent des niveaux de signaux en réponse à des interférences.

7. Procédé selon l'une quelconque des revendications précédentes, selon lequel le paramètre de préférence de la bande des fréquences est déterminé en réponse à la distribution de capacités d'unités d'abonnés pour un groupe d'unités d'abonnés.

8. Procédé selon l'une quelconque des revendications précédentes, selon lequel le paramètre de préférence de la bande des fréquences est déterminé en réponse à une distribution de chargement de cellule pour un groupe de stations de base.

9. Procédé selon l'une quelconque des revendications précédentes, selon lequel le paramètre de préférence des bandes de fréquences est déterminé en réponse à une disponibilité de bandes de fréquences.

10. Procédé selon l'une quelconque des revendications précédentes, selon lequel le paramètre de préférence des bandes de fréquences est déterminé en réponse à un chargement des bandes de fréquences.

11. Procédé selon l'une quelconque des revendications précédentes, comprenant en outre l'étape consistant à décaler au moins l'une des valeurs du paramètre de transfert de l'ensemble, et ce d'une valeur de préférence de cellule hiérarchique.

12. Procédé selon l'une quelconque des revendications précédentes, selon lequel des cellules candidates possédant des valeurs de paramètres de transfert inférieures à un niveau de qualité donné ne sont pas incluses dans l'ensemble.

13. Procédé selon l'une quelconque des revendications précédentes, comprenant en outre l'étape consistant à ranger la liste de transfert comprenant des candidats de transfert possibles en fonction de leur budget de puissance.

14. Station de base pour un système de communication cellulaire comprenant une pluralité de bandes de fréquences, la station de base étant **caractérisée par** :

un récepteur pour recevoir un paramètre de préférence de bandes de fréquences pour au moins une première bande de fréquences de la pluralité de bandes de fréquences; et

un processeur de transfert pouvant agir pour

préterminer une pluralité de valeurs de paramètres de transfert pour une pluralité de cellules candidates pour une unité d'abonné;

générer un ensemble de valeurs de paramètres de transfert de décalage comprenant la pluralité de valeurs de paramètres de transfert, les valeurs de paramètres de transfert associées à la première fréquence étant décalées et ce du paramètre de préférence de la bande des fréquences; et

déterminer une cellule candidate de transfert en réponse aux valeurs de paramètres de transfert de décalage de l'ensemble.

15. Système de communication cellulaire comprenant une pluralité de bandes de fréquences, le système de communication cellulaire comprenant

un processeur (317) de la bande des fréquences pour déterminer un paramètre de préférence de la bande des fréquences pour au moins une première bande de fréquences;

des moyens de distribution pour distribuer le paramètre de préférence de la bande des fréquences à la pluralité de stations de base;

une pluralité de stations de base (305,307,309), chacune de la pluralité de stations de base comprenant :

des moyens pour déterminer une pluralité de valeurs de paramètres de transfert pour une pluralité de cellules candidates pour une unité d'abonné;

des moyens pour générer un ensemble de valeurs de paramètres de transfert de décalage comprenant la pluralité de valeurs de paramètres de transfert, les valeurs des paramètres de transfert associées à la première fréquence étant décalées du paramètre de préférence de la bande des fréquences; et

des moyens pour déterminer une cellule candidate de transfert en réponse aux valeurs de paramètres de transfert de décalage de l'ensemble.

- *PRIOR ART* -

*FIG. 1*

*FIG. 2*

*FIG. 3*

401 — DETERMINE PREFERRED FREQUENCY BAND DISTRIBUTION

403 — DETERMINE FREQUENCY BAND PREFERENCE PARAMETER

405 — COMMUNICATE FREQUENCY BAND PREFERENCE PARAMETER TO BASE STATIONS

407 — RECEIVE FREQUENCY BAND PREFERENCE PARAMETER AT BASE STATION

NO

409 — BAND PREFERENCE MODE ENABLED?

YES

PERFORM CONVENTIONAL HANDOVER

411

413 — DETERMINE HANDOVER PARAMETERS FOR CANDIDATES

415 — GENERATE CANDIDATE SET WITH BAND PREFERENCE COMPENSATED HANDOVER PARAMETERS

417 — SELECT HANDOVER CANDIDATE

419 — INSTIGATE HANDOVER

421 — END OF HANDOVER EVALUATION

*FIG. 4*

| 505 | CANDIDATE 3 |
| 507 | CANDIDATE 6 |
| 509 | CANDIDATE 4 PREFERRED BAND |
| 511 | CANDIDATE 1 |
| 513 | CANDIDATE 7 PREFERRED BAND |
| 515 | CANDIDATE 5 |
| 517 | CANDIDATE 8 |
| 519 | CANDIDATE 2 PREFERRED BAND |
| 521 | CANDIDATE 9 |

501

| 509 | CANDIDATE 4 PREFERRED BAND |
| 505 | CANDIDATE 3 |
| 513 | CANDIDATE 7 PREFERRED BAND |
| 507 | CANDIDATE 6 |
| 511 | CANDIDATE 1 |
| 519 | CANDIDATE 2 PREFERRED BAND |
| 515 | CANDIDATE 5 |
| 517 | CANDIDATE 8 |
| 521 | CANDIDATE 9 |

503

## FIG. 5